# EUROPEAN PATENT SPECIFICATION

(11) **EP 2 295 822 B1**
(45) Date of publication and mention of the grant of the patent: **11.06.2014**
(21) Application number: 10174275.7
(22) Date of filing: 27.08.2010
(51) Int. Cl.: F16B 37/00

(54) **Screw connection with threaded bolt and nut**
Schraubverbindung mit Gewindebolzen und Mutter
Connexion par vis avec boulon et écrou filetés

(30) Priority: 11.09.2009 DE 102009029403
(43) Date of publication of application: 16.03.2011
(73) Proprietor: Newfrey LLC, Newark, DE 19711 (US)
(72) Inventor: Rosemann, Frank, 35394, Gießen (DE); Kempf, Christian, 35394, Gießen (DE); Reindl, Johann, 35394, Gießen (DE)
(74) Representative: Haar, Lucas Heinz Jörn

(56) References cited:
- DE-A1- 2 247 289
- DE-A1- 19 857 225

## Description

The invention relates to a screw connection with a threaded bolt and a nut that may be screwed thereon, with the exterior thread of the threaded bolt and the interior thread of the nut having the same incline and the same thread angle and with a material being used for the nut that is softer, at least in the region of the interior thread, than a material used for the threaded bolt, at least in the region of the exterior thread. The invention further relates to a nut made of plastic for such a screw connection.

A screw connection of the type mentioned above is known from DE 198 57 225 A1. This screw connection is used to fasten a gas pedal module to the body of a motor vehicle and is intended for automatic bolting processes. In this screw connection, the threaded bolt has a metric standard unified thread having a thread angle of 60 degrees and the interior thread of the nut, before being screwed onto the threaded bolt, has an outer diameter that is less than the outer diameter of the exterior thread of the threaded bolt. Here, the interior and exterior threads must be very dimensionally stable so that the nut is not overloaded.

German published patent application DE 2,903,845 A1 discloses various embodiments of a screw connection with a thread that is not quite completely cut. In the embodiments described, however, the thread angle of the interior thread of the nut and the thread angle of the exterior thread of the bolt are different, so that the deformation of the thread tips of the exterior thread of the bolt does not cause jamming between the bolt and the nut. The durability of the screw connection is reduced by these different thread angles.

In addition, FR 1,343,518 A discloses a self-securing nut, the interior thread of which has a slightly smaller inner diameter and a slightly smaller outer diameter as compared to the standard unified thread. This is intended to generate a sufficient torque against loosening when bolted onto a threaded bolt with a corresponding standard unified thread. The known design is not suitable for securing nuts made of plastic from loosening due to their high degree of elasticity and the cold flow behavior of plastics.

JP 09-112,522 A discloses a threaded bolt made of plastic whose exterior thread is a trapezoidal thread having flanks of different widths and a radially outermost boundary surface that is inclined toward the central axis of the threaded bolt in order to facilitate the force fitting of the threaded bolt into a receiving bore.

The object of the invention is to create a screw connection of the type mentioned at the outset in which the nut screwed onto the threaded bolt is secured against loosening by a torque, with only a relatively small amount of torque being required to screw the nut onto the threaded bolt. In addition, the nut should be prevented from breaking while being screwed on.

This object is attained according to the invention by a screw connection having the features listed in Claim 1. Advantageous embodiments of the screw connection are described in Claims 2 to 14.

The screw connection according to the invention comprises a threaded bolt and a nut to be screwed thereon, with the threaded bolt being provided with an exterior thread provided with a thread rib in the style of a trapeze thread having flanks converging radially outwards that are straight in profile and a radially exterior boundary surface located therebetween, with the nut having a bore provided over at least part of its length with an interior thread formed by a thread groove, with the thread groove having flanks converging radially outwards that are straight in profile, which transition radially outwards in a continuous fashion into a round section forming the thread base of the thread groove, with a material being used for the nut that is softer, at least in the region of the interior thread, than a material used for the threaded bolt, at least in the region of its exterior thread, with outer diameter of the exterior thread of the threaded bolt being greater than the diameter of an imaginary coaxial cylinder whose outer surface separates the flank sections of the interior thread of the nut before being screwed onto the threaded bolt from the round section forming the thread groove, such that, when the nut is screwed onto the threaded bolt, the exterior thread of the threaded bolt displaces material in the region of the thread base of the interior thread of the nut, with an open space being kept free between the radially outermost boundary surface of the thread rib of the threaded bolt and the thread base of the thread groove of the nut for accommodating displaced material. Here, the outer diameter of the interior thread of the nut is the diameter of an imaginary cylinder that is coaxial to the interior thread and whose surface lines touch the thread base of the interior thread and the outer diameter of the exterior thread of the threaded bolt is equal to double the greatest radius of the radially outermost boundary surface of the thread rib of the exterior thread.

The screw connection according to the invention allows an easy and reliable bolting and attains a high degree of self-locking momentum after bolting. The radial load on the nut remains relatively small and the shape of the interior thread reduces the risk of breakage to the nut.

In one embodiment of the screw connection, the radially outermost boundary surface of the thread rib of the exterior thread of the threaded bolt may be part of a cylindrical surface, with the outer diameter of the exterior thread of the threaded bolt being smaller than the outer diameter of the interior thread of the nut.

However, a design of the screw connection is preferred in which the radially outermost boundary surface of the thread rib of the exterior thread of the threaded bolt is inclined relative to the central axis of the threaded bolt such that the outer diameter of the thread flank facing the threaded end is smaller than the outer diameter of the thread flank facing away from the threaded end, with the outer diameter of the interior thread of the nut being approximately equal to or less than the outer diameter of the exterior thread of the threaded bolt. Here, the effective load-bearing flanks of the nut and threaded bolt have a greater width, such that the screw connection has a greater resilience. It has been shown to be advantageous for the radially outermost boundary surface of the thread rib to be inclined such that a radial line touching the radially outermost boundary surface would intersect with the central axis of the threaded bolt at an angle of approximately 30 degrees.

According to another recommendation of the invention, the diameter of an imaginary cylinder that intersects with the inclined radially outermost boundary surface of the thread rib in the center may be smaller than the outer diameter of the interior thread of the nut. This results in a hollow space between the radially outermost boundary surface and the thread base of the interior thread of the bolt that is able to accommodate material displaced by the thread rib. Thus, the nut is prevented from being locked too tightly while being screwed on, and the nut is prevented from bearing too great a load.

In addition, provision may be made for the interior thread of the nut to have an original core diameter before the nut is screwed onto the threaded bolt that is greater than a core diameter of the exterior thread of the threaded bolt, such that at least a portion of the displaced material may be accommodated in a region present between the original core diameter of the nut and the core diameter of the bolt.

According to an additional recommendation of the invention, the screw connection comprises a nut made of plastic having a bore provided over at least a portion of its length with an interior thread formed by a thread groove, with the thread groove having a thread profile that has straight flank sections converging radially outward in the manner of a trapezoidal thread which transition radially outwards in a continuous fashion into a round section forming the thread base of the thread groove. Such a nut is break-proof and may be produced as one piece in a simple and cost-effective manner by means of master forming. In order to achieve greater fastening torques, the flank angle of the flank sections of the nut may be 25 to 35 degrees, particularly 30 degrees.

It is particularly advantageous for the bore of the nut to have a threaded end having an insertion section that has an inner diameter sized such that the nut, along with the insertion section, may be placed axially onto a threaded bolt having the exterior thread associated with the interior thread of the nut, with a locking projection being provided in the insertion section having a shape and size such that the nut may be held on the exterior thread of a threaded bolt by a locking retention. The locking projection may be an annular bead having a central plane that is radial to the bore axis. This has the advantage that the nut and the threaded bolt may be locked in any desired rotational position.

In order to facilitate the combination of the nut with the threaded bolt, the nut may additionally have a centering section expanding conically outward that follows the insertion section outwardly.

The invention shall be described in greater detail below with reference to one exemplary embodiment, which is shown in the drawings. Shown are:
- Fig. 1: a perspective view of a nut according to the invention,
- Fig. 2: a cross section of the nut according to Fig. 1,
- Fig. 3: an enlarged section of the threaded end of the nut according to Fig. 1 with the threaded end of the threaded bolt disposed therein,
- Fig. 4: an enlarged section of the engagement region between the interior thread of the nut according to Fig. 1 and the exterior thread of the associated threaded bolt,
- Fig. 5: an attachment of two parts using a screw connection according to the invention.

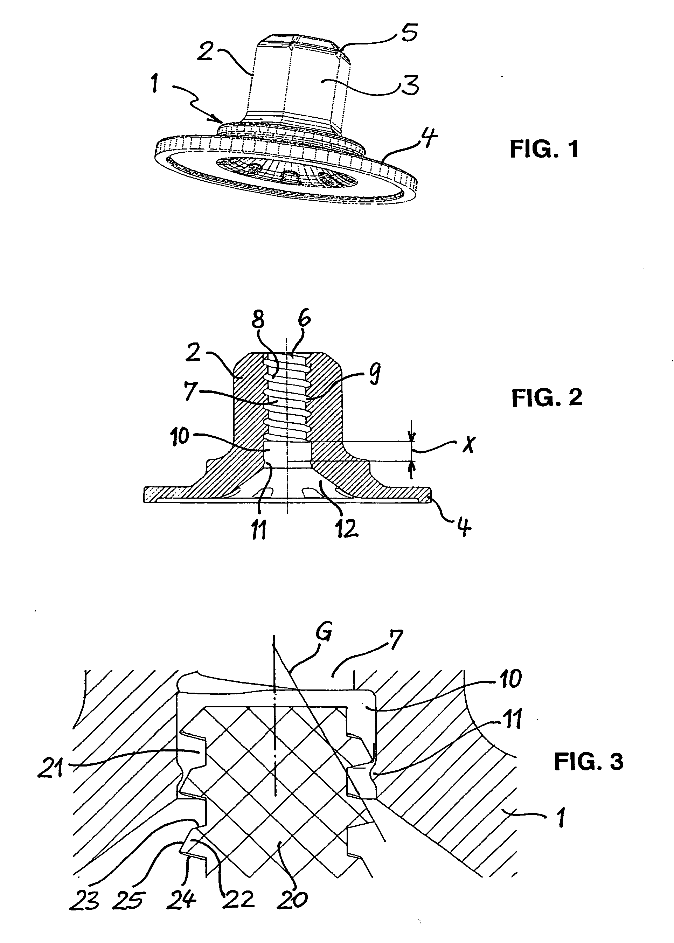

The nut 1 shown in Fig. 1 is a single-piece formed part made of plastic. The nut has a body 2 having an outer contour in the shape of a six-sided prism, forming a tool engagement area 3. At one end of the body 2, a flange 4 in the shape of a circular disc is formed that serves to support the nut 1 on a component to be fastened. The other end of the body 2 is provided with oblique surfaces 5 in order to facilitate the attachment of a tool.

As may be seen from Fig. 2, the nut 1 is penetrated by a bore 6 that is coaxial to the tool engagement area 3 and that has three different sections. A first section 7 extends through the largest portion of the body 2 and is provided with an interior thread 8 formed by a thread groove 9 that is sunk into the wall of the bore 6 and extends along a screw line. The interior thread 8 of the nut 1 has an outer diameter *Da* that is equal to the diameter of an imaginary cylinder that is coaxial to the interior thread, the surface lines of which touch the thread base of the thread groove 9. The core diameter *Dk* of the interior thread 8 is the diameter of the bore 6 in the section 7 into which the thread groove 9 is sunk.

On the side facing the flange 4, a cylindrical insertion section 10 is adjacent to the section 7; the inner diameter De of the insertion section is somewhat greater than the outer diameter of the interior thread 8. At a distance x from the section 7, the insertion section 10 has an annular bead 11 projecting inwards, whose center lies in a plane that is radial to the axis of the bore. The inner diameter Dr of the annular bead 11 is less than the outer diameter *Da* and greater than the core diameter *Dk* of the interior thread 8.

A centering section 12 follows the insertion section 10 in the direction of the flange 4; the centering section expands conically outwards and serves to center the nut 1 relative to a threaded bolt.

Fig. 3 shows the cooperation of the annular bead 11 with the insertion end of a threaded bolt 20 inserted into the insertion section 10. The threaded bolt 20 has an exterior thread 21 formed by a thread rib 22 running along a screw line. The thread rib 22 has two flanks 23, 24 converging radially outwards in the manner of a trapezoidal thread. The flank angle of the flanks 23, 24 is essentially 30°, with angle bisectors lying in a plane that is perpendicular to the axis of the bolt. The flank 23 is facing the insertion end of the threaded bolt 20 and the flank 24 is facing away from the insertion end. Deviating from a conventional and standardized trapezoidal thread, the thread rib 22 has a radially outermost boundary surface 25 that is inclined relative to the central axis of the threaded bolt 20 such that the radial extension of the flank 23 is smaller than the radial extension of the flank 24. The incline of the boundary surface 25 has a magnitude such that a line G lying in the longitudinal central plane of the threaded bolt 20 and touching the boundary surface 25 would intersect the central axis of the threaded bolt 20 at an angle of approximately 30°. As a result of this design, the outer diameter of the exterior thread 21 is equal to double the radius of the outermost boundary surface 25, i.e., the radius of the edge on which the boundary surface 25 meets the flank 24.

The nut 1 and the threaded bolt 20 are adapted to one another such that the inner diameter De of the insertion section 10 of the nut 1 is greater than the outer diameter *Da* of the exterior thread 21. In contrast, the inner diameter of the annular bead 11 is sufficiently less than the exterior diameter *Da* of the exterior thread 21 that the threaded bolt 20 with the initial section of the thread rib 22 may be pressed through the annular bead 11 into the insertion section 10 by hand but only with a certain degree of force and is able to arrive in the region between the annular bead 11 and the thread section 7. Pressing the bolt in is facilitated by the incline of the boundary surface 25 because the annular bead 11 comes into contact with the boundary surface 25 upon the threaded bolt 20 being pressed in and is able to slide away via said boundary surface. However, if a user desires to remove the nut 1 from the threaded bolt 20 in the opposite direction, the steep flank 24 with its sharp edge comes into contact with the annular bead 11 on its outermost edge, such that a considerably greater amount of force is necessary to remove the nut 1 from the end of the threaded bolt 20. The annular bead 11 in the insertion section 10 therefore allows a connection between the nut 1 and the threaded bolt 20 by axial insertion and without the need for a screwing process. Although the retaining force of the inserted connection is considerably less than the retaining force of the screw connection, it is still sufficient for pre-mounting components to be fastened using the nut by merely attaching the nut, and is even able to hold the nut in place on the threaded bolt for overhead mounting. Persons mounting components may therefore pre-mount a component by attaching the nut to the bolt and then have their hands free to arrange the component if necessary and then to retrieve the mounting tool for screwing the pre-mounted nuts into place.

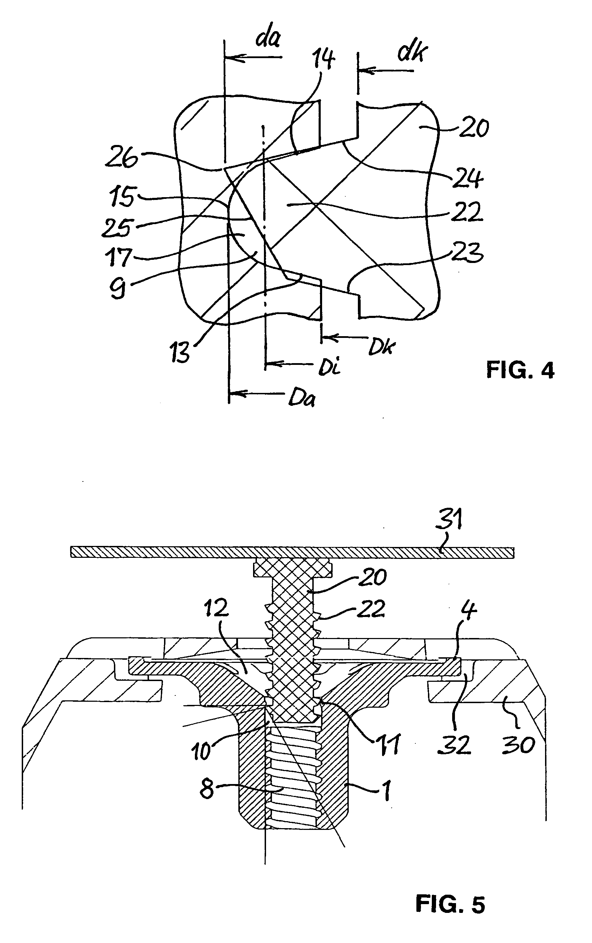

Fig. 4 shows the profiles of the interior thread 8 of the nut 1 and the exterior thread 21 of the threaded bolt 20 in an overlapping, concentric arrangement corresponding to the engagement position of the thread upon screwing the nut 1 onto the bolt 20 but without showing the deformation of the interior thread caused by the thread rib 22 upon its penetration into the thread groove 9. The thread groove 9 of the nut 1 has flanks 13, 14 converging radially outwards and forming a flank angle of essentially 30° with one another. On the surface line of an imaginary concentric cylinder with a diameter *Di*, the straight profile of the flanks 13, 14 transitions in a continuous fashion into a round section 15 that forms the thread base of the thread groove 9. The center of the round section 15 forms the crest of the thread base and determines the outer diameter *Da* of the interior thread 8. The flanks 13, 14 end radially inward at the core diameter *Dk*.

The flanks 13, 14 of the thread groove 9 have the same incline as the flanks 23, 24 of the thread rib 22. The distance between the flanks 13, 14 may be the same as or, depending on the tolerance, somewhat smaller than the distance between the flanks 23, 24. Fig. 4 shows a slightly smaller distance between the flanks. This causes the thread rib 22 to cause a slight compression, particularly of the flank 13, upon penetrating the thread groove 9. Space is present for material thus displaced between the core diameter *Dk* of the interior thread 8 and the smaller core diameter dk of the exterior thread 21. Displaced material may also be accommodated between the boundary surface 25 of the thread rib 22 and the round section 15 of the thread groove 9 because the thread rib 22 does not completely fill the thread groove 9 by virtue of the incline of the boundary surface 25; rather, a free hollow space 17 is present between the boundary surface 25 and the section 15 of the thread groove 9.

The outer diameter *da* of the thread rib 22, which is determined by the edge 26 formed by the flank 24 and the boundary surface 25, has approximately the same size as the outer diameter *Da* of the thread groove 9. Upon screwing together the nut and bolt, the thread rib 22 therefore burrows into the region of the section 15 adjacent to the flank 14; material of the nut 1 displaced thereby may also be accommodated by the hollow space 17.

The deformation of the thread groove 9 by the thread rib 22 caused by screwing the nut and bolt together generates a frictional torque by means of which the screw connection between the nut 1 and the threaded bolt 20 is secured against loosening. The design of the thread groove 9 and the thread rib 22 described above has the advantage that the radial load on the nut during screwing on remains relatively small, such that the risk of breakage of the nut is effectively prevented. Moreover, by changing the diameter *Di* and the outer diameter *Da* of the thread groove, it is possible for the frictional torque to be adapted to the desired requirements. The achievement of a high tightening torque is made possible by the large degree of steepness as compared to symmetrical threads and the relatively large contact surface of the flank 24 of the thread rib 22.

Fig. 5 shows a preferred use of the screw connection described above. Here, the nut 1 serves to fasten a component 30, for example, an undercarriage, to a carrier part 31 that is disposed, for example, on the carriage of a vehicle. To this end, the nut 1 is pre-mounted with its flange 4 in a slot 32 of the component 30. A threaded bolt 20 made of metal is welded onto the carrier part 31 and extends downwards from the carrier part 31. It is common for additional fastening points to be provided on the component 30 and on the carrier part 31, which are provided with a nut 1 and a threaded bolt 20 in an analogous fashion.

For the mounting, the component 30 is first guided toward the carrier part 31 from below and oriented relative to the carrier part 31 in such a way that, at each of the fastening points, the threaded bolt 20 arrives in the centering section 12 of the nut 1. By continuing to move the component 30 closer to the carrier part 31, the nut 1 is centered relative to the threaded bolt 20, and the component 30 is further aligned. The component 30 is then pressed firmly against the component 31 at each of the fastening points, whereby the threaded bolt 20 at each fastening point penetrates into the insertion section 10 of the nut 1 until the end of the threaded bolt 20 abuts the interior thread 8 of the nut 1. In this process, the initial section of the thread rib 22 slides past the annular bead 11, thus holding the nut 1 and the component 30 it holds firmly onto the threaded bolt 20. In the pre-mounting position thus attained, the position of the component 30 may be readjusted relative to the carrier part 31 and the tool for screwing on the nuts may be retrieved. The nuts may be screwed onto the bolts by hand or with the aid of an automatic mounting device. The latter is favored because the tightening torque attainable with the nut according to the invention is considerably greater than the frictional torque occurring during the screwing-on process. After screwing on, the frictional torque obtained by virtue of the design of the engaging threads guarantees a strong self locking, by means of which the nut is prevented from twisting loose under operating conditions.

## Claims

1. A screw connection having a threaded bolt (20) and a nut (1) that may be screwed thereon, wherein
the threaded bolt (20) is provided with an exterior thread (21) comprising a thread rib (22) in the manner of a trapezoidal thread having flanks (23, 24) that are straight in profile and that converge radially outward and a radially outermost boundary surface (25) located therebetween,
the nut (1) has a bore (6) provided on at least part of its length with an interior thread (8) formed by a thread groove (9), with the thread groove (9) having flank sections (13, 14) that are straight in profile and that converge radially outward in the manner of a trapezoidal thread, said flank sections transitioning radially outward in a continuous manner into a round section (15) forming the thread base of the thread groove (9),
a material is used for the nut (1) that is softer, at least in the region of the interior thread (8), than a material used for the threaded bolt (20), at least in the region of the exterior thread (21),
the exterior thread (21) of the threaded bolt (20) and the interior thread (8) of the nut (1) have an equal incline and an equal flank angle,
the outer diameter (*da*) of the exterior thread of the threaded bolt (20) is greater than the diameter (*Di*) of an imaginary cylinder whose surface separates the flank sections (13, 14) of the interior thread (8) of the nut (1) before being screwed onto the threaded bolt (20) from the round section (15) forming the thread base of the thread groove (9), such that, upon the nut (1) being screwed onto the threaded bolt (20), the exterior thread (21) of the threaded bolt (20) displaces material in the region of the thread base of the interior thread (8) of the nut (1),
a hollow space (17) is kept free between the radially outermost boundary surface (25) of the thread rib (22) of the threaded bolt (20) and the thread base of the thread groove (9) of the nut (1) in order to accommodate displaced material.

2. The screw connection according to Claim 1, **characterized in that** the radially outermost boundary surface of the thread rib of the exterior thread of the threaded bolt is part of a cylindrical surface and the outer diameter of the exterior thread is less than the outer diameter of the interior thread of the nut.

3. The screw connection according to Claim 1, **characterized in that** the radially outermost boundary surface (25) of the thread rib (22) of the exterior thread (21) of the threaded bolt (20) is inclined relative to the central axis of the threaded bolt (20) in such a way that the outer diameter of the thread flank (23) facing the threaded end is less than the outer diameter of the thread flank (24) facing away from the threaded end.

4. The screw connection according to the previous Claim, **characterized in that** a radial line touching the radially outermost boundary surface (25) of the thread rib (22) would intersect with the central axis of the threaded bolt (20) at an angle of approximately 30 degrees.

5. The screw connection according to the previous Claim, **characterized in that** the diameter of an imaginary cylinder whose surface line intersects the radially outermost boundary surface (25) of the thread rib (22) in the center is less than the outer diameter of the interior thread (8) of the nut (1).

6. The screw connection according to any one of the previous Claims, **characterized in that** the flank angle of the interior thread (8) and of the exterior thread (21) is 25 to 35 degrees, in particular 30 degrees.

7. The screw connection according to any one of Claims 2 to 6, **characterized in that** the outer diameter of the interior thread (8) of the nut (1) is approximately equal to or less than the outer diameter of the exterior thread (21) of the threaded bolt (20).

8. The screw connection according to any one of the previous Claims, **characterized in that**, before screwing the nut (1) onto the threaded bolt (20), the interior thread (8) of the nut (1) has an original core diameter (*Dk*) that is greater than a core diameter (*dk*) of the exterior thread (21) of the threaded bolt (20), such that at least part of the displaced material may be accommodated in a region that is present before bolting between the original core diameter (*Dk*) of the nut (1) and the core diameter (*dk*) of the threaded bolt (20).

9. The screw connection according to any one of the previous Claims, **characterized in that** the threaded bolt (20) is made of metal and the nut (1) is made of plastic.

10. The screw connection according to any one of the previous Claims, **characterized in that** the bore (6) comprises a threaded end having an insertion section (10) having an inner diameter of such a size that the nut (1) may be placed with its insertion section (10) axially onto the threaded bolt (20), and **in that** a locking projection is provided in the insertion section (10) having a shape and size such that the nut (1) may be held in place by locking attachment on the exterior thread (21) of a threaded bolt (20).

11. The screw connection according to Claim 10, **characterized in that** the locking projection is an annular bead (11) having a central plane that is radial relative to the axis of the bore.

12. The screw connection according to any one of Claims 10 or 11, **characterized in that** the bore (6) comprises a centering section (12) expanding conically outward that follows the insertion section (10) outwardly.

13. The screw connection according to any one of Claims 10 to 12, **characterized in that** the nut (1) has a tool engagement area (3) formed on its outer circumference that is coaxial to the interior thread (8).

14. The screw connection according to any one of Claims 10 to 13, **characterized by** a saucer-shaped flange (4) disposed on the threaded end of the nut (1).

## Patentansprüche

1. Schraubverbindung mit einem Gewindebolzen (20) und einer mit diesem verschraubbaren Mutter (1), wobei
der Gewindebolzen (20) mit einem Außengewinde (21) versehen ist, das in der Art eines Trapezgewindes eine Gewinderippe (22) mit im Profil geraden und radial nach außen konvergierenden Flanken (23, 24) und einer zwischen diesen liegenden radial äußere Begrenzungsfläche (25) aufweist,
die Mutter (1) eine Bohrung (6) hat, die zumindest auf einem Teil ihrer Länge mit einem durch eine Gewindenut (9) gebildeten Innengewinde (8) versehen ist, wobei die Gewindenut (9) im Profil gerade und in der Art eines Trapezgewindes radial nach außen konvergierende Flankenabschnitte (13,14) hat, welche radial nach außen stufenlos in einen den Gewindegrund der Gewindenut (9) bildenden runden Abschnitt (15) übergehen,
für die Mutter (1) ein Werkstoff verwendet ist der mindestens im Bereich des Innengewindes (8) weicher ist als ein für den Gewindebolzen (20) mindestens im Bereich des Außengewindes (21) verwendeter Werkstoff,
das Außengewinde (21) des Gewindebolzens (20) und das Innengewinde (8) der Mutter (1) eine gleich große Steigung und einen gleich großen Flankenwinkel haben,
der Außendurchmesser (da) des Außengewindes des Gewindebolzens (20) größer ist als der Durchmesser (*Di*) eines imaginären Zylinders, dessen Mantelfläche die Flankenabschnitte (13,14) des Innengewindes (8) der Mutter (1) vor dem Verschrauben mit dem Gewindebolzen (20) von dem den Gewindegrund der Gewindenut (9) bildenden runden Abschnitt (15) trennt, so dass bei dem Verschrauben der Mutter (1) mit dem Gewindebolzen (20) das Außengewinde (21) des Gewindebolzens (20) im Bereich des Gewindegrunds des Innengewindes (8) der Mutter (1) Werkstoff verdrängt,
zwischen der radial äußeren Begrenzungsfläche (25) der Gewinderippe (22) des Gewindebolzens (20) und dem Gewindegrund der Gewindenut (9) der Mutter (1) ein Hohlraum (17) zur Aufnahme von verdrängtem Werkstoff freigehalten ist.

2. Schraubverbindung nach Anspruch 1, **dadurch gekennzeichnet, dass** die radial äußere Begrenzungsfläche der Gewinderippe des Außengewindes des Gewindebolzens Teil einer Zylinderfläche ist und der Außendurchmesser des Außengewindes kleiner ist als der Außendurchmesser des Innengewindes der Mutter.

3. Schraubverbindung nach Anspruch 1, **dadurch gekennzeichnet, dass** die radial äußere Begrenzungsfläche (25) der Gewinderippe (22) des Außengewindes (21) des Gewindebolzens (20) relativ zur Mittelachse des Gewindebolzens (20) derart geneigt ist, dass der Außendurchmesser der dem Einschraubende zugekehrten Gewindeflanke (23) kleiner ist als der Außendurchmesser der dem Einschraubende abgekehrten Gewindeflanke (24).

4. Schraubverbindung nach dem vorhergehenden Anspruch, **dadurch gekennzeichnet, dass** eine die radial äußere Begrenzungsfläche (25) der Gewinderippe (22) berührende radiale Gerade die Mittelachse des Gewindebolzens (20) in einem Winkel von etwa 30 Grad schneidet.

5. Schraubverbindung nach dem vorhergehenden Anspruch, **dadurch gekennzeichnet, dass** der Durchmesser eines imaginären Zylinders, dessen Mantellinie die radial äußere Begrenzungsfläche (25) der Gewinderippe (22) in der Mitte schneidet, kleiner ist als der Außendurchmesser des Innengewindes (8) der Mutter (1).

6. Schraubverbindung nach einem der vorhergehenden Ansprüche, **dadurch gekennzeichnet, dass** der Flankenwinkel des Innengewindes (8) und des Außengewindes (21) 25 bis 35 Grad, insbesondere 30 Grad beträgt.

7. Schraubverbindung nach einem der Ansprüche 2 bis 6, **dadurch gekennzeichnet, dass** der Außendurchmesser des Innengewindes (8) der Mutter (1) etwa gleich dem Außendurchmesser des Außengewindes (21) des Gewindebolzens (20) oder kleiner als dieser ist.

8. Schraubverbindung nach einem der vorhergehenden Ansprüche, **dadurch gekennzeichnet, dass** vor dem Verschrauben der Mutter (1) mit dem Gewindebolzen (20) das Innengewinde (8) der Mutter (1) einen ursprünglichen Kerndurchmesser (Dk) hat, der größer ist als ein Kerndurchmesser (dk) des Außengewindes (21) des Gewindebolzens (20), so dass mindestens ein Teil des verdrängten Werkstoffs in einem vor dem Verschrauben zwischen dem ursprünglichen Kerndurchmesser (Dk) der Mutter (1) und dem Kerndurchmesser (dk) des Gewindebolzens (20) vorhandenen Bereich aufgenommen werden kann.

9. Schraubverbindung nach einem der vorhergehenden Ansprüche, **dadurch gekennzeichnet, dass** der Gewindebolzen (20) aus Metall und die Mutter (1) aus Kunststoff besteht.

10. Schraubverbindung nach einem der vorhergehenden Ansprüche, **dadurch gekennzeichnet, dass** die Bohrung (6) ein Einschraubende mit einem Einführabschnitt (10) aufweist, der einen Innendurchmesser von solcher Größe hat, dass die Mutter (1) mit dem Einführabschnitt (10) axial auf den Gewindebolzen (20) aufsteckbar ist, und dass in dem Einführabschnitt (10) ein Rastvorsprung von solcher Form und Größe vorgesehen sind, dass die Mutter (1) durch rastende Verankerung auf dem Außengewinde (21) eines Gewindebolzens (20) festhaltbar ist.

11. Schraubverbindung nach Anspruch 10, **dadurch gekennzeichnet, dass** der Rastvorsprung ein Ringwulst (11) mit zur Bohrungsachse radialer Mittelebene ist.

12. Schraubverbindung nach einem der Ansprüche 10 oder 11, **dadurch gekennzeichnet dass** die Bohrung (6) einen konisch nach außen erweiterten Zentrierabschnitt (12) umfasst, der sich nach außen an den Einführabschnitt (10) anschließt.

13. Schraubverbindung nach einem der Ansprüche 10 bis 12, **dadurch gekennzeichnet dass** die Mutter (1) einen auf ihrem Außenumfang ausgebildeten, zum Innengewinde (8) koaxialen Werkzeugeingriffsbereich (3) aufweist.

14. Schraubverbindung nach einem der Ansprüche 10 bis 13, **gekennzeichnet durch** einen am Einschraubende der Mutter (1) angeordneten, tellerförmigen Flansch (4).

## Revendications

1. Connexion par vis comprenant un boulon fileté (20) et un écrou (1) qui peut être vissé sur celui-ci, dans laquelle:
le boulon fileté (20) est pourvu d'un filet extérieur (21) comprenant une nervure de filet (22) à la manière d'un filet trapézoïdal comprenant des flancs (23, 24) dont le profil est droit et qui convergent radialement vers l'extérieur, et une surface de séparation radialement la plus extérieure (25) qui est située entre ceux-ci,
l'écrou (1) comprend un alésage (6) qui est formé sur au moins une partie de sa longueur avec un filet intérieur (8) formé par une rainure de filet (9), la rainure de filet (9) présentant des sections de flanc (13, 14) dont le profil est droit et qui convergent radialement vers l'extérieur à la manière d'un filet trapézoïdal, lesdites sections de flanc se transformant radialement vers l'extérieur d'une manière continue en une section ronde (15) en formant la base de filet de la rainure de filet (9),
une matière utilisée pour l'écrou (1) est plus tendre, au moins dans la région du filet intérieur (8), qu'une matière utilisée pour le boulon fileté (20), au moins dans la région du filet extérieur (21),
le filet extérieur (21) du boulon fileté (20) et le filet intérieur (8) de l'écrou (1) présentent une inclinaison égale et un angle de flanc égal,
le diamètre extérieur (da) du filet extérieur du boulon fileté (20) est supérieur au diamètre (Di) d'un cylindre imaginaire dont la surface sépare les sections de flanc (13, 14) du filet intérieur (8) de l'écrou (1) avant d'être vissé sur le boulon fileté (20) à partir de la section ronde (15) formant la base de filet de la rainure de filet (9), de telle sorte que, lorsque l'écrou (1) est vissé sur le boulon fileté (20), le filet extérieur (21) du boulon fileté (20) déplace de la matière dans la région de la base de filet du filet intérieur (8) de l'écrou (1),
un espace creux (17) est maintenu libre entre la surface de séparation radialement la plus extérieure (25) de la nervure de filet (22) du boulon fileté (20) et la base de filet de la rainure de filet (9) de l'écrou (1) dans le but de recevoir la matière déplacée.

2. Connexion par vis selon la revendication 1, **caractérisée en ce que** la surface de séparation radialement la plus extérieure de la nervure de filet du filet extérieur du boulon fileté fait partie d'une surface cylindrique, et le diamètre extérieur du filet extérieur est inférieur au diamètre extérieur du filet intérieur de l'écrou.

3. Connexion par vis selon la revendication 1, **caractérisée en ce que** la surface de séparation radialement la plus extérieure (25) de la nervure de filet (22) du filet extérieur (21) du boulon fileté (20) est inclinée par rapport à l'axe central du boulon fileté (20) de telle sorte que le diamètre extérieur du flanc de filet (23) qui fait face à l'extrémité filetée soit inférieur au diamètre extérieur du flanc de filet (24) qui tourne le dos à l'extrémité filetée.

4. Connexion par vis selon l'une quelconque des revendications précédentes, **caractérisée en ce qu'**une ligne radiale qui touche la surface de séparation radialement la plus extérieure (25) de la nervure de filet (22) couperait l'axe central du boulon fileté (20) à un angle d'approximativement 30 degrés.

5. Connexion par vis selon l'une quelconque des revendications précédentes, **caractérisée en ce que** le diamètre d'un cylindre imaginaire dont la ligne de surface coupe la surface de séparation radialement la plus extérieure (25) de la nervure de filet (22) au centre est inférieur au diamètre extérieur du filet intérieur (8) de l'écrou (1).

6. Connexion par vis selon l'une quelconque des revendications précédentes, **caractérisée en ce que** l'angle de flanc du filet intérieur (8) et du filet extérieur (21) est compris entre 25 degrés et 35 degrés, en particulier est égal à 30 degrés.

7. Connexion par vis selon l'une quelconque des revendications 2 à 6, **caractérisée en ce que** le diamètre extérieur du filet intérieur (8) de l'écrou (1) est approximativement égal ou inférieur au diamètre extérieur du filet extérieur (21) du boulon fileté (20).

8. Connexion par vis selon l'une quelconque des revendications précédentes, **caractérisée en ce que**, avant le vissage de l'écrou (1) sur le boulon fileté (20), le filet intérieur (8) de l'écrou (1) présente un diamètre de base original (Dk) qui est supérieur à un diamètre de base (dk) du filet extérieur (21) du boulon fileté (20), de telle sorte qu'au moins une partie de la matière déplacée puisse être reçue dans une région qui est présente avant le boulonnage entre le diamètre de base original (Dk) de l'écrou (1) et le diamètre de base (dk) du boulon fileté (20).

9. Connexion par vis selon l'une quelconque des revendications précédentes, **caractérisée en ce que** le boulon fileté (20) est constitué de métal, et l'écrou (1) est constitué de plastique.

10. Connexion par vis selon l'une quelconque des revendications précédentes, **caractérisée en ce que** l'alésage (6) présente une extrémité filetée comprenant une section d'insertion (10) présentant un diamètre intérieur d'une taille telle que l'écrou (1) puisse être placé avec sa section d'insertion (10) axialement sur le boulon fileté (20), et **en ce qu'**une saillie de verrouillage est prévue dans la section d'insertion (10) et présente une forme et une taille telles que l'écrou (1) puisse être maintenu en place par une fixation de verrouillage sur le filet extérieur (21) d'un boulon fileté (20).

11. Connexion par vis selon la revendication 10, **caractérisée en ce que** la saillie de verrouillage est une moulure annulaire (11) présentant un plan central qui est radial par rapport à l'axe de l'alésage.

12. Connexion par vis selon l'une quelconque des revendications 10 ou 11, **caractérisée en ce que** l'alésage (6) comprend une section de centrage (12) s'étendant de façon conique vers l'extérieur qui suit la section d'insertion (10) vers l'extérieur.

13. Connexion par vis selon l'une quelconque des revendications 10 à 12, **caractérisée en ce que** l'écrou (1) présente une surface d'engagement d'outil (3) formée sur sa circonférence extérieur qui est coaxiale au filet intérieur (8).

14. Connexion par vis selon l'une quelconque des revendications 10 à 13, **caractérisée par** une bride en forme de soucoupe (4) qui est disposée sur l'extrémité filetée de l'écrou (1).
